# FASCICULE DE BREVET EUROPEEN

(11) **EP 2 309 726 B1**
(45) Date de publication et mention de la délivrance du brevet: **23.03.2016**
(21) Numéro de dépôt: 10354045.6
(22) Date de dépôt: 07.09.2010
(51) Int. Cl.: H04N 5/335

(54) **Circuit de détection avec dérivation d'une partie du courant d'un photodétecteur**
Detektionsschaltung mit teilweiser Umleitung des Photodetektorstroms
Detection circuit with bypass of a part of the photodetector current

(30) Priorité: 22.09.2009 FR 0904516
(43) Date de publication de la demande: 13.04.2011
(73) Titulaire: Société Française de Détecteurs Infrarouges - SOFRADIR, 91120 Palaiseau (FR)
(72) Inventeur: Baud, Laurent, 38690 Bevenais (FR)
(74) Mandataire: de Jong, Jean Jacques

(56) Documents cités:
- US-A1- 2009 090 844
- US-A1- 2009 128 677
- US-A1- 2009 141 155
- SHIH Y-C ET AL: "A New CMOS Pixel Structure for Low-Dark-Current and Large-Array-Size Still Imager Applications", IEEE TRANSACTIONS ON CIRCUITS AND SYSTEMS PART I: REGULAR PAPERS, IEEE SERVICE CENTER, NEW YORK, NY, US, vol. 51, no. 11, 1 November 2004 (2004-11-01), pages 2204-2214, XP011122002, ISSN: 1057-7122, DOI: 10.1109/TCSI.2004.835684

## Description

### Domaine technique de l'invention

L'invention concerne un circuit de détection comprenant un photodétecteur relié à un circuit de lecture, un circuit de dérivation agencé pour dériver une partie du courant du photodétecteur entre le photodétecteur et le circuit de lecture, et un transistor de polarisation du photodétecteur connecté entre le photodétecteur et le circuit de lecture.

### État de la technique

Les circuits de détection optique comprennent généralement un photodétecteur couplé à un circuit de lecture. Le circuit de lecture a pour rôle de convertir et d'amplifier le signal provenant du photodétecteur afin qu'il puisse être traité.

Dans le domaine de l'infrarouge, le courant du photodétecteur est constitué d'une composante thermique, considérée comme courant parasite, et d'une composante utile, appelée courant photonique. La composante de courant thermique correspond, par exemple, au courant d'obscurité et n'est pas porteuse d'informations utiles.

Un problème d'un tel circuit de détection survient lors d'une lecture de forts courants issus du photodétecteur. En effet, un trop fort courant conduit à une saturation du circuit de lecture et/ou l'impossibilité d'intégrer la totalité du courant. Ce problème est particulièrement contraignant dans l'imagerie infrarouge, notamment lors de la détection de grandes longueurs d'onde ou lors de la détection sur un fond ambiant fortement émissif. Dans de tels cas, la composante de courant thermique, ou le courant de scène minimum, est largement supérieure à la composante de courant utile et il devient difficile de discriminer le courant utile. Il est alors nécessaire de corriger le courant du photodétecteur en dérivant le courant parasite.

Une fonction de dérivation du courant parasite peut être réalisée au moyen d'un circuit représenté à la figure 1 et décrit dans le brevet FR2634900. Ce système de détection est utilisé avec un photodétecteur et un circuit de lecture couplés en injection directe. Par couplage en injection directe, on entend que les électrons issus du photodétecteur sont directement injectés dans un transistor qui assure la polarisation du photodétecteur.

Ce système comprend un photodétecteur 1 relié à un circuit de lecture 2. Le circuit de lecture 2 peut être du type intégrateur, et comporte par exemple une capacité d'intégration C1. Un transistor de polarisation T1 est connecté entre le photodétecteur 1 (borne A) et une borne B de la capacité C1. Le transistor T1 assure la polarisation du photodétecteur. Le système comporte, de plus, un circuit de dérivation 3 du courant parasite du photodétecteur.

Ce circuit de dérivation 3 comporte une source de courant réglable, constituée par exemple par un transistor MOS de type P T2 connecté à une ligne d'alimentation VDD.

Un circuit de commande 4 du transistor T2 comporte une capacité de commande C2 dont une borne C est connectée à la grille du transistor T2. La capacité de commande C2 est en outre reliée à la capacité C1 par l'intermédiaire d'un interrupteur S1 et à la ligne d'alimentation VDD par l'intermédiaire de l'interrupteur S1 et d'un interrupteur S2.

Le fonctionnement de ce circuit se décompose en deux phases : une phase d'initialisation pendant laquelle le photodétecteur reçoit un flux de photons de référence et une phase de prise de vue pendant laquelle il reçoit le rayonnement à étudier.

Pendant la phase d'initialisation, le détecteur est par exemple placé devant un écran froid, un corps noir ou encore devant l'espace pour une application spatiale. Le flux de photons de référence correspond par exemple à l'observation d'un écran froid si l'on souhaite supprimer que le courant d'obscurité et le courant parasite lié aux instruments, ou au fond ambiant si l'on désire supprimer également le courant de scène.

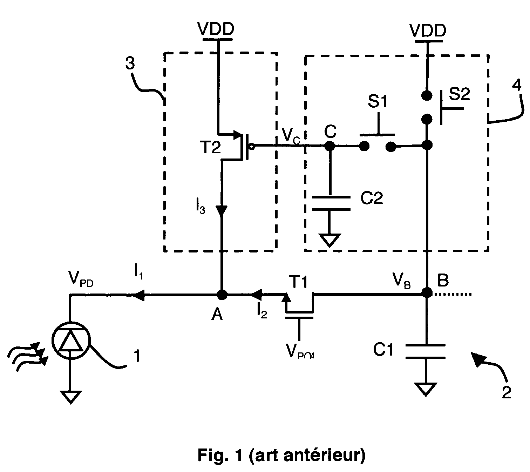

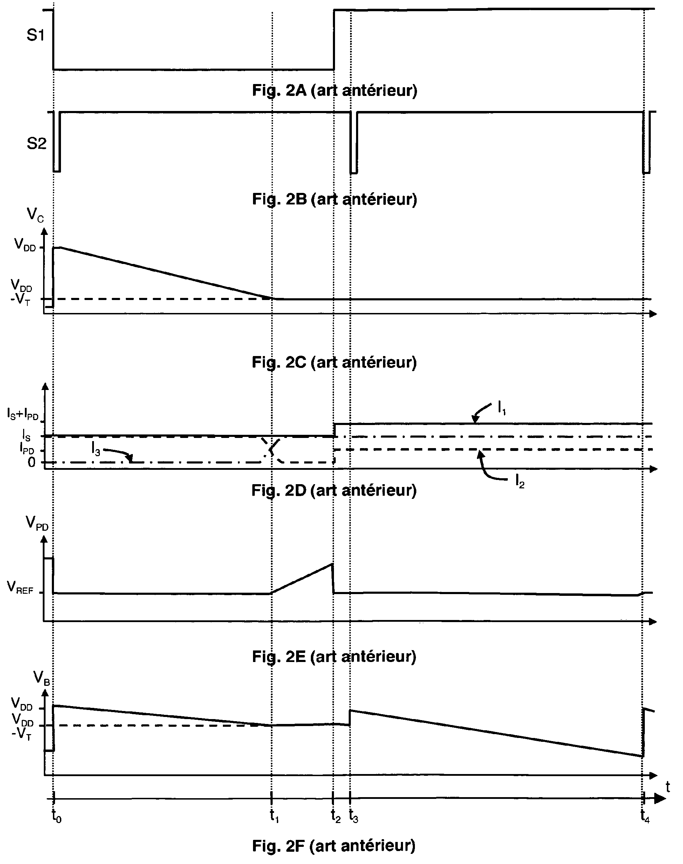

Les figures 2A à 2F, que l'on décrira en même temps, représentent des chronogrammes simplifiés de signaux du circuit de détection de la figure 1. Les figures 2A et 2B correspondent respectivement aux signaux logiques commandant les interrupteurs S1 et S2. L'état bas (ou niveau logique '0') représente, à titre d'exemple, l'état fermé des interrupteurs. Les figures 2C à 2F représentent des tensions et courants en différents points du circuit.

La phase d'initialisation a lieu entre des instants t₀ et t₂. Dans la phase d'initialisation, le courant I₁ tiré par le photodétecteur correspond au courant parasite, noté I_{S} sur la figure 2D. On établit dans cette phase un courant de dérivation I₃ dans le circuit 3, égal au courant I₁, qui annulera le courant parasite lors de la phase de prise de vue ultérieure.

Au début de la phase d'initialisation (instant t₀), le courant de dérivation I₃ est nul, c'est-à-dire que le transistor T2 n'a pas encore reçu de consigne. Le réglage du transistor T2 s'effectue de la manière suivante : les interrupteurs S1 et S2 sont tous deux fermés (états bas sur les figures 2A et 2B) afin de charger la capacité d'intégration C1 et la capacité de commande C2 à leur valeur initiale, correspondant au potentiel d'alimentation VDD. Les potentiels V_{B} et V_{C} aux points B et C, représentés respectivement aux figures 2F et 2C, sont donc portés au potentiel d'alimentation VDD à l'instant t₀. Puis, l'interrupteur S2 est ouvert de manière que la capacité d'intégration C1 et la capacité de commande C2 se déchargent dans le photodétecteur 1. Les capacités C1 et C2 sont donc déchargées par le courant I₁ tiré par le photodétecteur. Ainsi, la tension aux bornes de la capacité de commande C2, c'est-à-dire le potentiel au point C, diminue (Fig. 2C), tout comme la tension aux bornes de la capacité C1, c'est-à-dire le potentiel au point B (Fig. 2F).

La tension aux bornes de la capacité de commande C2, appliquée sur la grille du transistor T2, constitue la consigne de réglage de la source de courant. La tension aux bornes de la capacité de commande C2 diminuant jusqu'à une certaine valeur seuil, le transistor T2 devient conducteur et un courant de dérivation I₃ s'établit dans le circuit 3 à un instant t₁, comme représenté à la figure 2D. La valeur seuil du potentiel V_{C} qui rend le transistor T2 conducteur vaut VDD - V_{T} (Fig. 2C), V_{T} étant la tension de seuil du transistor T2 et VDD le potentiel d'alimentation.

Au fur et à mesure que la tension aux bornes de la capacité de commande C2 diminue en dessous de ce seuil, le courant I₃ augmente jusqu'à fournir la totalité du courant I₁ du photodétecteur (Fig. 2D). Alors, le courant I₂ provenant des capacités C1 et C2 s'annule (Fig. 2D). Les tensions V_{B} et V_{C} aux bornes des capacités C1 et C2 se stabilisent, comme cela est représenté sur les figures 2C et 2F entre les instants t₁ et t₂. A la fin de la phase d'initialisation (instant t₂), le courant I₃ dans le circuit de dérivation 3 est égal au courant I₁ du photodétecteur 1 et donc au courant parasite I_{S} à compenser (Fig. 2D).

A partir de l'instant t₂, le circuit de détection est dans la phase de prise de vue. A cet instant, l'interrupteur S1 est ouvert (Fig. 2A). La capacité de commande C2 conserve la tension de consigne à appliquer au transistor T2. Le photodétecteur observe une scène utile et tire donc un courant I₁ composé du courant photonique, noté I_{PD} sur la figure 2D, et du courant parasite I_{S}. Le courant parasite I_{S} est dévié par le circuit de dérivation 3, sous la forme du courant I₃ établi par le transistor T2, et seul le courant photonique I_{PD}, sous la forme du courant I₂ (Fig. 2D), est injecté dans le transistor de polarisation T1.

Le courant utile correspondant à I₂ à partir de l'instant t₂ (courant photonique I_{PD}) est prêt à être intégré par la capacité d'intégration C1. L'intégration du courant utile démarre peu après un instant t₃ où on opère une réinitialisation de la tension aux bornes de la capacité d'intégration C1 par une brève fermeture de l'interrupteur S2 (Fig. 2B). Le potentiel au point B est donc porté au potentiel d'alimentation VDD à l'instant t₃ et diminue progressivement suite à l'intégration du courant utile I_{PD} dans la capacité C1 (Fig. 2F).

Ce système permet donc de dériver le courant parasite afin que seul le courant utile soit intégré. En revanche, ce circuit présente de faibles performances en termes de fréquence de coupure, de rendement d'injection et de stabilité de la polarisation.

### Objet de l'invention

L'invention vise un circuit de détection simple permettant la correction du courant du photodétecteur et ayant de bonnes performances. L'invention vise plus particulièrement un circuit de détection capable de maintenir de manière précise la polarisation du photodétecteur, et ayant un rendement d'injection et une fréquence de coupure élevés.

Selon l'invention, on tend vers cet objectif par le fait que le transistor de polarisation est interposé entre le photodétecteur et un noeud de dérivation auquel le circuit de dérivation est connecté, au lieu d'être interposé entre le circuit de dérivation et le circuit de lecture.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente un circuit de détection selon l'art antérieur,
- les figures 2A à 2F représentent des évolutions de signaux du circuit de la figure 1,
- la figure 3 représente des caractéristiques courant-tension du circuit de la figure 1,
- la figure 4 représente un mode de réalisation de circuit de détection selon l'invention,
- la figure 5 représente un évolution de signal du circuit de la figure 4, et
- la figure 6 représente des caractéristiques courant-tension du circuit de la figure 4.

### Description de modes particuliers de réalisation

Dans un circuit de détection du type de la figure 1, le rendement d'injection ηᵢₙⱼ est le rapport du courant injecté dans le transistor de polarisation T1 (I₂ dans le cas de la figure 1) sur le courant total de la photodiode I₁. La fréquence de coupure de l'étage d'entrée formé par le transistor de polarisation T1 est également proportionnelle au courant I₂ traversant le transistor T1.

A l'instant t₁ dans la phase d'initialisation (Fig. 2D), lorsque le courant I₃ s'établit dans le circuit de dérivation 3, le courant I₂ tiré des capacités C1 et C2 s'annule. Le courant I₂, injecté dans le transistor T1, reste nul entre les instants t₁ et t₂. Le rendement d'injection et la fréquence de coupure sont donc nuls.

Durant la phase de prise de vue, le courant I₂ injecté dans le transistor T1 prend la valeur du courant utile, ou photonique I_{PD}. Le rendement d'injection ηᵢₙⱼ, (égal au rapport I₂/I₁ dans le cas de la figure 1) est d'autant plus faible que le rapport du courant parasite I_{S} sur le courant utile I_{PD} est grand. Ainsi, le courant parasite étant prépondérant devant le courant utile dans les cas d'utilisation cités précédemment, on obtient un rendement faible et une basse fréquence de coupure dans cette phase.

Un faible rendement d'injection entraîne que le bruit du transistor de polarisation devienne prépondérant. De plus, la fréquence de coupure doit être suffisamment importante pour ne pas couper une partie du signal utile.

Par ailleurs, le circuit de la figure 1 n'est pas efficace pour maintenir la polarisation du photodétecteur. La polarisation du photodétecteur est réalisée par le transistor T1. Une tension constante de polarisation V_{POL} est appliquée sur l'électrode de commande du transistor T1. Cette tension fixe alors la tension aux bornes du photodétecteur lorsque le transistor T1 conduit normalement (V_{PD} = V_{POL} - V_{T}, où V_{T} est la tension de seuil du transistor T1). Comme on peut le remarquer sur la figure 2E, le potentiel V_{PD} sur la borne du photodétecteur est correctement fixé à V_{REF} = V_{POL} - V_{T} jusqu'à l'instant t₁.

A partir de l'instant t₁, le transistor T1 n'est traversé par aucun courant (I₂=0) et ne peut plus assurer la polarisation du photodétecteur.

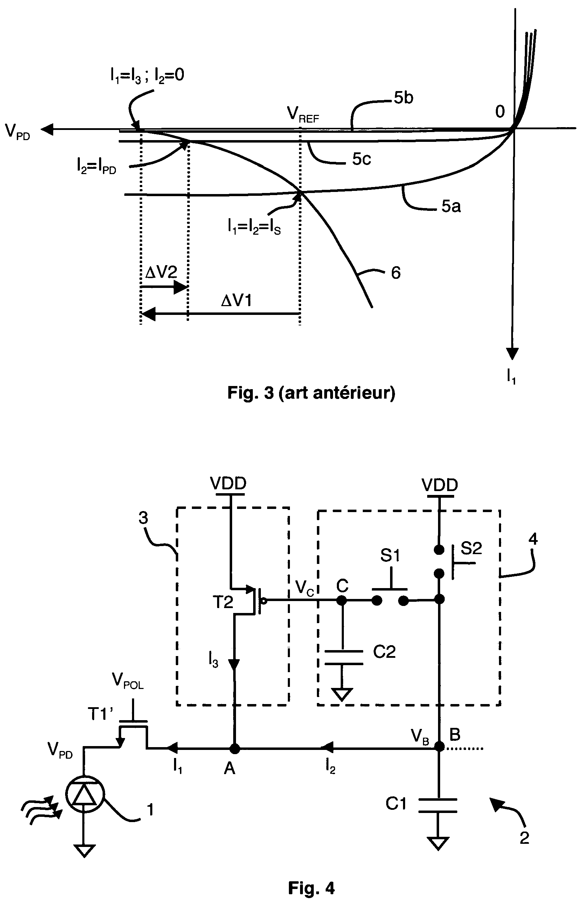

La figure 3 représente des caractéristiques I₁(V_{PD}) du photodétecteur à différents états de fonctionnement, respectivement 5a entre les instants t₀ et t₁, 5b entre t₁ et t₂ et 5c entre t₂ et t₄. La figure 3 représente également la caractéristique I₁(V_{PD}) 6 du transistor de polarisation T1. L'intersection d'une caractéristique (5a, 5b ou 5c) du photodétecteur et de la caractéristique 6 du transistor T1 définit un point de fonctionnement du circuit de détection, ou point de polarisation.

La caractéristique 5a représente le fonctionnement du photodétecteur dans le circuit de la figure 1 entre les instants t₀ et t₁. Le courant I₂, égal au courant I₁ du photodétecteur et au courant parasite I_{S}, traverse le transistor T1 jusqu'à l'établissement du courant de dérivation I₃. Le transistor T1 commandé par la tension V_{POL}, correspondant à la caractéristique 6 sur la figure 3, polarise correctement le photodétecteur à V_{REF} = V_{POL} - V_{T}.

A partir de l'instant t₁ où le courant I₃ s'établit dans le circuit de dérivation 3, le courant I₂ traversant le transistor T1 devient nul (Fig. 2D). Le transistor n'est plus apte à polariser le photodétecteur. Le point de fonctionnement se décale sur la caractéristique 6 jusqu'à I = 0, provoquant ainsi le déplacement de la caractéristique 5a du photodétecteur 1 vers la caractéristique 5b. La tension V_{PD} de la borne du photodétecteur 1 augmente de ΔV1, correspondant à l'augmentation observée sur la figure 2E, entre t₁ et t₂.

A l'instant t₂, la phase de prise de vue démarre et le photodétecteur tire un courant correspondant au courant parasite I_{S} et au courant utile I_{PD}. Seul le courant I_{PD} traverse le transistor T1. Le point de fonctionnement se déplace alors dans le sens opposé sur la caractéristique 6 du transistor. La tension V_{PD} diminue de ΔV2.

Ainsi, le circuit de la figure 1 présente lors de son utilisation des phases de variation de polarisation ΔV1 et ΔV2 du photodétecteur. Ces variations provoquent un changement d'impédance du photodétecteur et une modification du courant qui risque de fausser la fonction de dérivation du courant et/ou la fonction de détection. En particulier, la variation ΔV1-ΔV2 traduit une différence dans les conditions de fonctionnement entre la phase d'initialisation et la phase de prise de vue.

La figure 4 représente un mode de réalisation de circuit de détection permettant de limiter ces inconvénients. On retrouve les éléments du circuit de la figure 1, notamment le photodétecteur 1, le circuit de lecture 2, le circuit de dérivation 3 et le circuit de commande 4. Le transistor de polarisation, référencé T1' sur la figure 4, est interposé entre le photodétecteur 1 et le noeud de dérivation A, et non plus entre le circuit de lecture 2 et le noeud de dérivation A. Le noeud de dérivation A est le noeud auquel le circuit de dérivation 3 est connecté.

Il résulte d'une telle modification que le courant injecté dans le transistor T1' ne s'annule jamais. En effet, il est constamment égal au courant I₁ du photodétecteur. Le courant injecté est donc égal soit au courant parasite I_{S} dans la phase d'initialisation, soit au courant parasite I_{S} ajouté du courant utile I_{PD} dans la phase de prise de vue. Le fonctionnement global du circuit de détection n'est pas modifié. Ainsi, les signaux du circuit de détection restent inchangés, excepté le potentiel V_{PD} sur la borne du photodétecteur.

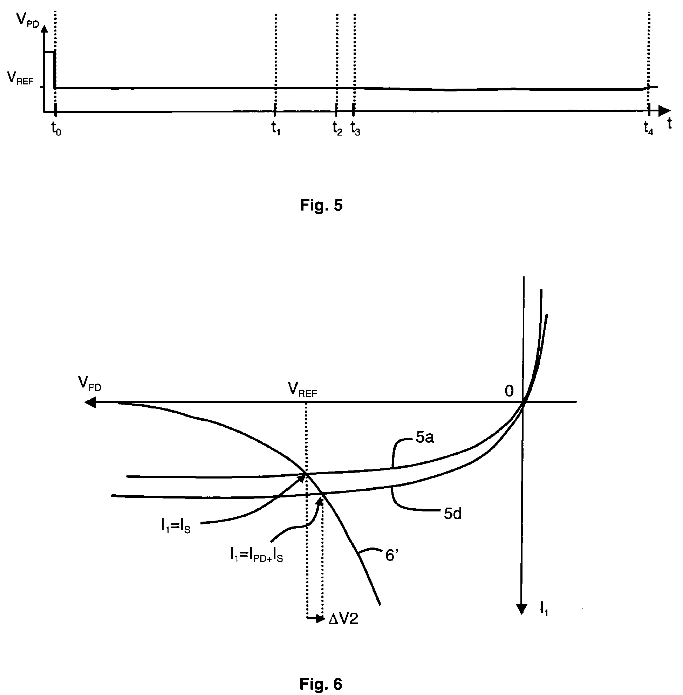

La figure 5 représente le potentiel V_{PD} sur la borne du photodétecteur dans le circuit de détection de la figure 4. Celui-ci reste constant sur l'ensemble de la phase d'initialisation, contrairement au potentiel V_{PD} du circuit de l'art antérieur (figure 2E) qui augmente entre les instants t₁ et t₂.

La figure 6 représente la caractéristique 6' du transistor de polarisation T1' et les caractéristiques du photodétecteur 1 pendant les différentes phases de fonctionnement du circuit de détection de la figure 4. La caractéristique 5a du photodétecteur représente son fonctionnement pendant l'ensemble de la phase d'initialisation. Le courant traversant le transistor T1' est, à chaque instant de cette phase, égal au courant parasite I_{S}. De ce fait, le point de fonctionnement, correspondant au point d'intersection entre la caractéristique 5a du photodétecteur 1 et la caractéristique 6' du transistor T1', est fixé. La polarisation du photodétecteur est stable pendant la phase d'initialisation et la tension V_{PD} vaut V_{REF} = V_{POL} - V_{T} (Fig. 5).

Pendant la phase de prise de vue, le courant I₁ du photodétecteur qui traverse le transistor T1' augmente de I_{PD}. Le courant utile I_{PD} étant faible devant I_{S}, le point de polarisation se déplace légèrement sur la caractéristique 6' du transistor T1'. La caractéristique 5a du photodétecteur évolue vers la caractéristique 5d. Le décalage de polarisation ΔV2 associé est faible et sans conséquence sur le fonctionnement du photodétecteur.

Le circuit de détection de la figure 4 permet également une nette amélioration du rendement d'injection et de la fréquence de coupure. En effet, le transistor de polarisation T1' est désormais systématiquement traversé par au moins le courant parasite I_{S}, qui représente la part la plus importante du courant du photodétecteur.

Lors de l'établissement du courant de dérivation pendant la phase d'initialisation, le courant injecté dans le transistor T1' vaut maintenant I₁, valeur égale à I_{S}. Le courant injecté ne s'annule plus lors de l'établissement du courant I₃ dans le circuit de dérivation 3. La fréquence de coupure et le rendement d'injection étant proportionnels au courant injecté dans le transistor T1', ils ne sont donc plus nuls pendant cette phase.

De plus, pendant la phase de prise de vue, le courant traversant le transistor T1' est égal au courant parasite I_{S} plus le courant utile I_{PD}. La fréquence de coupure et le rendement d'injection ne sont donc plus seulement proportionnels au courant utile mais à la somme du courant parasite I_{S} et du courant utile I_{PD}.

Il en résulte donc une amélioration globale de la fréquence de coupure et du rendement d'injection, ce dernier étant proche de 1.

Le circuit de détection de la figure 4 présente donc un point de polarisation stable pendant la phase d'initialisation et la phase de prise de vue, tout en ayant un rendement d'injection et une fréquence de coupure plus importants par rapport au circuit de détection de la figure 1.

De nombreuses variantes et modifications du circuit de détection décrit ici apparaîtront à l'homme du métier. Notamment, l'invention n'est pas limitée à un type particulier de photodétecteur. Le dispositif décrit ci-dessus peut être utilisé avec une photodiode, un phototransistor ou tout autre type de photodétecteur, dans les domaines de rayonnement visible, infrarouge ou rayonnement X. La nature et le sens des transistors pourront êtres inversés et il n'est pas exclu d'utiliser des alimentations séparées pour les différents composants du circuit.

## Revendications

1. Circuit de détection comprenant :
- un photodétecteur (1) relié à un circuit de lecture (2) comportant un condensateur (C1),
- un circuit de dérivation (3) agencé pour dériver une partie du courant du photodétecteur (1), et
- un transistor de polarisation (T1') du photodétecteur connecté entre le photodétecteur (1) et le circuit de lecture (2), le transistor de polarisation (T1') étant interposé entre le photodétecteur (1) et un noeud de dérivation (A) auquel le circuit de dérivation (3) est connecté
circuit **caractérisé en ce que**
- le photodétecteur (1) est relié au circuit de lecture (2) par l'intermédiaire du transistor de polarisation (T1'),
- le circuit de dérivation (3) est connecté entre le transistor de polarisation (T1') et le circuit de lecture (2).

## Patentansprüche

1. Detektionsschaltung, umfassend:
- einen Photodetektor (1), der mit einer einen Kondensator (C1) umfassenden Leseschaltung (2) verbunden ist,
- einen Abzweigschaltkreis (3), der dazu ausgelegt ist, einen Teil des Stroms des Photodetektors (1) abzuzweigen, und
- einen Transistor zum Polarisieren (T1') des Photodetektors, der zwischen dem Photodetektor (1) und der Leseschaltung (2) angeschlossen ist, wobei der Polarisationstransistor (T1') zwischen dem Photodetektor (1) und einem Abzweigknoten (A), an dien der Abzweigschaltkreis (3) angeschlossen ist, zwischengeschaltet ist,
Schaltung, **dadurch gekennzeichnet, dass**
- der Photodetektor (1) mit der Leseschaltung (2) mittels des Polarisationstransistors (T1') verbunden ist,
- der Abzweigschaltkreis (3) zwischen dem Polarisationstransistor (T1') und der Leseschaltung (2) angeschlossen ist.

## Claims

1. A detection circuit comprising:
- a photodetector (1) connected to a readout circuit (2) comprising a capacitor (C1),
- a branch circuit (3) arranged to divert a part of the current of the photodetector (1), and
- a bias transistor (T1') of the photodetector connected between the photodetector (1) and the readout circuit (2), the bias transistor (T1') being connected between the photodetector (1) and a bypass node (A) to which the branch circuit (3) is connected
circuit **characterized in that**
- the photodetector (1) is connected to the readout circuit (2) by means of the bias transistor (T1').
- the branch circuit (3) is connected between the bias transistor (T1') and the readout circuit (2).
